Europäisches Patentamt

European Patent Office

Office européen des brevets

(19)

(11) Veröffentlichungsnummer: **0 152 895 B1**

# EUROPÄISCHE PATENTSCHRIFT

(12)

(45) Veröffentlichungstag der Patentschrift: **12.06.91**

(51) Int. Cl.⁵: **G01S 7/52**

(21) Anmeldenummer: **85101465.4**

(22) Anmeldetag: **12.02.85**

(54) Schaltanordnung für einen Ultraschall-Entfernungsmesser.

(30) Priorität: **18.02.84 DE 3405915**

(43) Veröffentlichungstag der Anmeldung:
**28.08.85 Patentblatt 85/35**

(45) Bekanntmachung des Hinweises auf die
Patenterteilung:
**12.06.91 Patentblatt 91/24**

(84) Benannte Vertragsstaaten:
**DE FR GB IT SE**

(56) Entgegenhaltungen:
DE-A-31 352 82      DE-B- 2 907 582
DE-C- 962 589       FR-A- 2 503 873
GB-A- 1 241 663     GB-A- 2 034 472
US-A- 3 733 582

IEEE TRANSACTIONS ON INDUSTRIAL ELEC-
TRONICS, Band IE-29, Nr. 4, November 1982,
Seiten 336-341, IEEE, New York, US; C. CANA-
LI et al.: "A temperature compensated ultrasonic sensor operating in air for distance
and proximity measurements"

PATENTS ABSTRACTS OF JAPAN, Band 6,
Nr. 262 (P-164)[1140], 21. Dezember 1982; &
JP-A-57 157 167 (HOKUSHIN DENKI SEISA-
KUSHO K.K.) 28-09-1982

Elektronik, 1983, Heft 26, Seite 113

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Weishaupt, Walter
Am Wismat 28b
W-8000 München 60(DE)**
Erfinder: **Ramböck, Josef
Linnenbrüggerstrasse 31
W-8000 München 82(DE)**

(74) Vertreter: **Bullwein, Fritz
Bayerische Motoren Werke Aktiengesellschaft Postfach 40 02 40 Petuelring 130 AJ-
33
W-8000 München 40(DE)**

EP 0 152 895 B1

**Beschreibung**

Die Erfindung bezieht sich auf eine schaltanordnung nach dem Oberbegriff des Patentanspruchs 1.

Derartige Ultraschall-Entfernungsmesser dienen generell zur berührungslosen Abstandsmessung und bei Kraftfahrzeugen insbesondere als sogenannte Einparkhilfe. Dabei sind am Rand des Kraftfahrzeugs ein oder mehrere derartige Entfernungsmesser angeordnet, die beispielsweise im Multiplexbetrieb angesteuert werden können. Die bauliche Ausführung mehrerer derartiger Entfernungsmesser ist in der US-PS 3 842 397, der Multiplexbetrieb mehrerer derartiger Messer in der DE-OS 31 35 282 beschrieben. Zwar ist es ferner bekannt, die Ansprechempfindlichkeit des Empfängers entsprechend der abnehmenden Intensität des reflektierten Signals zu vergrößern und damit beispielsweise das Produkt aus Ansprechempfindlichkeit und Schallpegel innerhalb des Meßbereichs auf einen konstanten Wert einzustellen (vgl. DE-PS 29 23 979), doch stößt die Verwendung von Ultraschall-Entfernungsmessern für die Bestimmung von Objekten im Nahbereich, das heißt in einem Abstand von kleiner 0,5 Meter, auf erhebliche Schwierigkeiten. Ursache hierfür ist das Abklingverhalten des Senders.

Aus der GB-2034472 A ist eine gattungsgemäße Schaltanordnung bekannt. Dort wird die Sendeleistung mit Hilfe eines verstellbaren Widerstands manuell durch den Fahrer selbst eingestellt. Dies bedeutet für den Fahrzeugbenutzer eine erhebliche Unbequemlichkeit, da er beispielsweise bei Verwendung des Entfernungsmessers zur Bestimmung des rückwärtigen Abstands beim Rückwärtsfahren zusätzlich den Widerstand bzw. die Sendeleistung des Senders manipulieren muß. Bedingt durch die häufig nur zur Verfügung stehende kurze Zeit kann es dabei zu einer Fehleinstellung der Sendeleistung kommen. Ist die Sendeleistung zu niedrig, dürfte der Entfernungsmesser völlig oder zumindest weitgehend unwirksam sein. Ist die Sendeleistung zu hoch, besteht insbesondere aufgrund der Benutzung ein und desselben Ultraschall-Wandlers als Sender und Empfänger ebenfalls eine Gefahr der völligen Unwirksamkeit, da der Sender für den Empfangsbetrieb noch nicht abgeklungen ist. Darüber hinaus können bei einer übermäßig großen Sendeleistung der Empfänger bzw. die nachgeschalteten Mittel zur Bestimmung der Objektsentfernung übersteuert werden und damit Schaden nehmen.

Aus der GB 1241663 ist ferner eine Echolot-Vorrichtung zur Tiefenbestimmung von Gewässern bekannt. Dabei wird die Sendeleistung des Senders entsprechend der Entfernung des Objekts eingestellt. Dies dient jedoch dazu, den Nachhall des Meeresbodens weitgehend zu eliminieren. Ferner ist eine Begrenzung des Untersuchungsbereichs vorgesehen, die sich durch den Tiefgang des Schiffes ergibt.

Schließlich ist aus der DE 31 35 282 ein Ultraschallabstandsmesser zur Verwendung in Kraftfahrzeugen oder dgl. bekannt, bei dem mit Hilfe eines gesonderten Begrenzerkreises alle Empfangssignale nach Masse abgeleitet werden, deren Amplitude ein vorgegebenes Maß übersteigt.

Der Erfindung liegt die Aufgabe zugrunde, eine Schaltanordnung der eingangs genannten Art zu schaffen, die auch bei kleinem Abstand des zu bestimmenden Objekts vom Sender selbsttätig eine zuverlässige Aussage liefert.

Die Erfindung löst diese Aufgabe durch die kennzeichnenden Merkmale des Patentanspruchs 1.

Wesentlich für die Erfindung ist die selbsttätige Einstellung der Sendeleistung entsprechend der gemessenen Entfernung des Objekts. Damit werden besondere Schutzmaßnahmen des Empfängers überflüssig. Die Empfindlichkeit des Empfängers kann über den gesamten Entfernungsbereich konstant bleiben. Durch die selbsttätige Arbeitsweise der Schaltanordnung wird ein hohes Maß an Wirksamkeit und Zuverlässigkeit des Entfernungsmessers erreicht. Die besonderen Vorteile der Erfindung ergeben sich aus den physikalischen Eigenschaften eines Ultraschall-Wandlers. Dieser besitzt ein Abklingverhalten, das sich in einem Nachschwingen aufgrund der Massenträgheit der verwendeten Bauteile zeigt. Dieses Abklingverhalten ist um so größer, ...... (weiter mit der bisherigen Beschreibung Seite 2, Zeile 12, ff.). je größer die Sendeleistung ist. Wird die Sendeleistung reduziert, so verringert sich auch die Abklingzeit des Senders. Bei Objekten unmittelbar in der Nähe des Senders wird somit nur eine geringe Sendeleistung abgestrahlt. Aufgrund des kleinen Abstands macht sich die entfernungsabhängige Abnahme des Schallpegels des reflektierten Signals nicht störend bemerkbar. Gleichzeitig ist, bedingt durch die geringe Sendeleistung, der Sender abgeklungen, bevor das reflektierte Signal eingeht. Damit kann dieses Signal ohne weiteres aufgenommen und weiterverarbeitet werden.

Vorteilhafte schaltungstechnische Maßnahmen, die im wesentlichen auf die Verringerung des schaltungstechnischen Aufwands abzielen, sind in den sich an den Patentanspruch 1 anschließenden weiteren Patentansprüchen beschrieben. Dabei verdient die Maßnahme besondere Beachtung, die erste Messung mit maximaler Sendeleistung vorzunehmen. Dadurch ergibt sich bereits bei dieser Messung eine Aussage darüber, ob ein Objekt innerhalb des Meßbereichs liegt. Die exakte Bestimmung des Abstands dieses Objekts erfolgt dann in der angegebenen Weise durch Anpassen der Sendeleistung an den Abstand des Objekts. Bemerkenswert ist ferner die Maßnahme, den an sich bekannten Empfangsverstärker mit entsprechend der Laufzeit des Ultraschallsignals erhöhter Ansprechempfindlichkeit mit zwei Empfindlichkeitsstufen zu versehen. Damit wird es möglich, zwei aneinander anschließende Meßbereiche mit ein und demselben Sender/Empfänger zu messen.

In der Zeichnung ist ein Ausführungsbeispiel der Erfindung dargestellt.

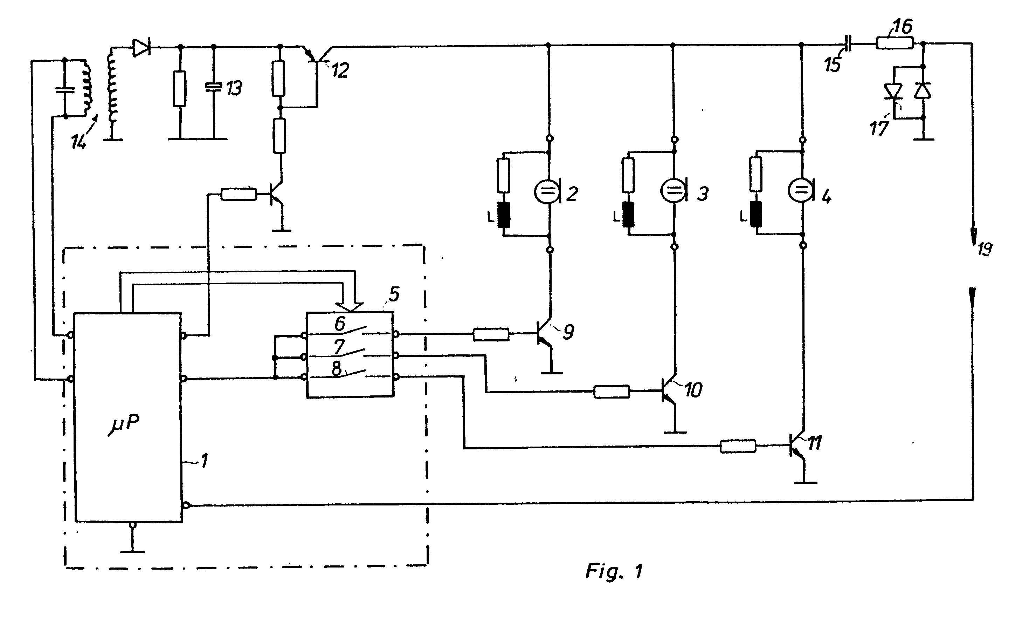

Die Schaltanordnung von Figur 1 enthält als zentrales Steuerelement einen Mikroprozessor 1, der zyklisch Ultraschall-Abstandsgeber 2, 3 und 4 aktiviert. Hierzu dient ein Zyklusschalter 5, der mit Hilfe je eines Steuerschalters 6 - 8 einen Schalter 9 - 11 in Form eines Transistors schaltet. Dabei wird innerhalb des jeweiligen Schalterzyklus zunächst ein Ultraschallsignal gepulst ausgesandt und anschließend daran mit demselben Ultraschall-Abstandsgeber das gegebenenfalls von einem Objekt reflektierte Ultraschallsignal aufgenommen. Das Aussenden des Ultraschallsignals erfolgt mit Hilfe eines ebenfalls durch den Mikroprozessor 1 gesteuerten zentralen Transistor-Schalters 12, der eine Versorgungsspannung an den jeweiligen Abstandsgeber 2 bis 4 durch den jeweiligen Schalter 9 bis 11 gepulst anlegt. In der Empfangsphase ist der Schalter 12 geöffnet und der jeweilige Schalter 9 bis 11 bleibend geschlossen.

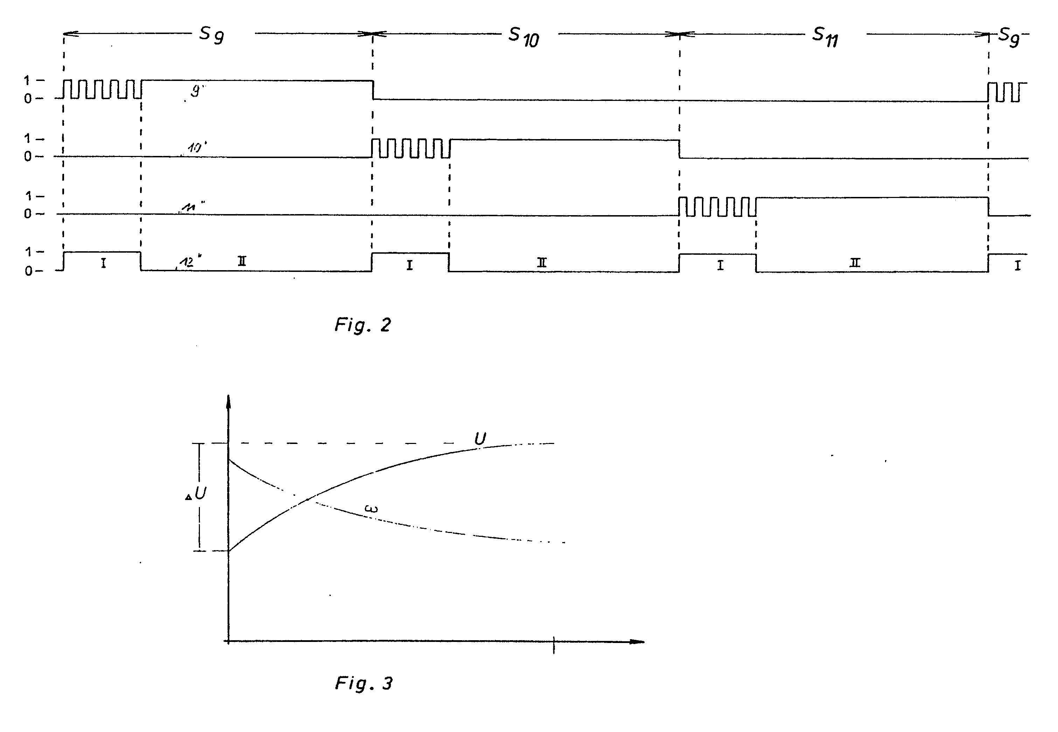

Das Schaltschema der Schalter 9 bis 12 ist in Figur 2 gezeigt. Dabei bezeichnet 0 den Zustand "Schalter geöffnet" und "1" den Zustand "Schalter geschlossen". Die Sendephase jedes Schaltzyklus 5 9, 5 10 bzw 5 11 ist mit I, die Empfangsphase mit II bezeichnet.

Die Versorgungsspannung wird durch einen Kondensator 13 (Fig. 1) geliefert, der entsprechend dem Abstand eines Objekts von einem der Abstandsgeber 2 - 4 aufgeladen ist. Hierzu dient ein Resonanz- Übertrager 14, dessen primärseitige Erregerfrequenz durch den Mikroprozessor 1 eingestellt ist. Dabei ist die Erregerfrequenz gleich der Resonanzfrequenz, wenn innerhalb des Meßbereichs kein Objekt vorhanden ist und gegenüber dieser Frequenz um so größer, je näher sich ein Objekt an einem der Abstandsgeber 2 - 4 befindet. Der Zusammenhang zwischen diesem Abstand, der primärseitigen Frequenz $\omega$ des Resonanz-Übertragers 14 und der am Kondensator 13 anliegenden Versorgungsspannung U ist in Figur 3 qualitativ dargestellt.

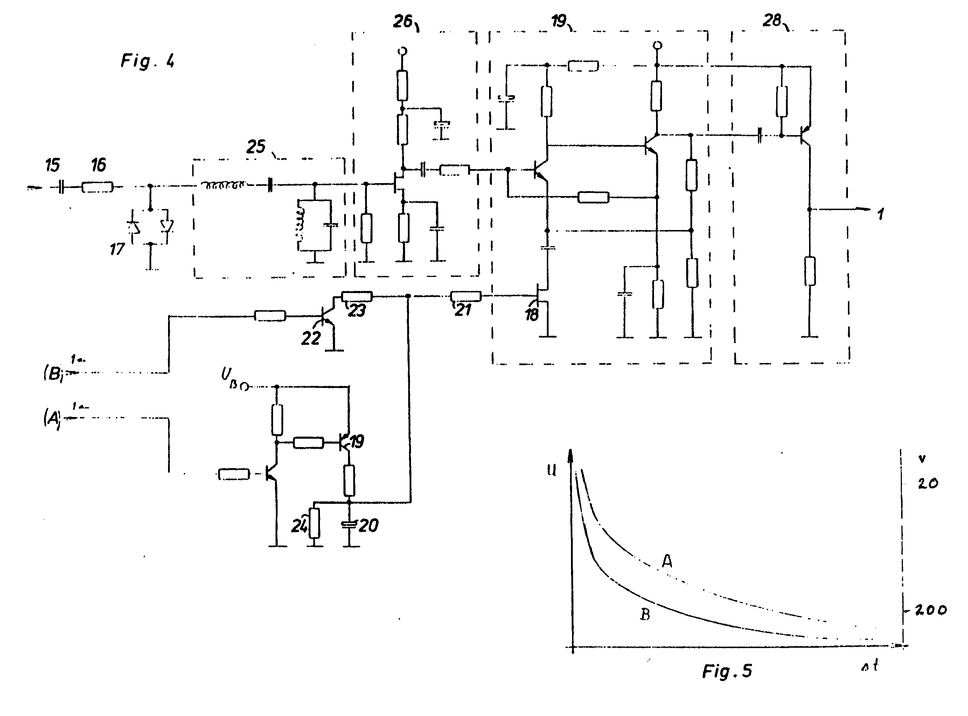

Das in der Empfangsphase II in die Abstandsgeber 2, 3 oder 4 eingehende reflektierte Ultraschallsignal gelangt über einen Entkoppel- Kondensator 15 (Figur 1) und einen Eingangs- Widerstand 16 parallel zu Eingangs- Schutzdioden 17 in einen Echosignal- Verstärker 19, der in Figur 4 dargestellt ist.

Dieser Verstärker enthält als zentrales Element einen steuerbaren Emitterwiderstand 18, der das Verstärkungsverhältnis des Verstärkers 19 bestimmt. Dieses ist reziprok zum Wert des Emitterwiderstands, der seinerseits entsprechend der Laufzeit des reflektierten Ultraschallsignals und entsprechend dem zu bestimmenden Entfernungsbereich eingestellt ist. Hierzu dient ein durch den Mikroprozessor 1 gesteuerter Schalter in Form eines Transistors 19, der den Ladevorgang eines Kondensators 20 mittels einer Betriebsspannungsquelle $V_B$ steuert. Dieser ist über einen Widerstand 21 am Steuereingang des Emitterwiderstands 18 angeschlossen.

Das Einstellen unterschiedlicher Entfernungsbereiche erfolgt mit Hilfe eines weiteren, ebenfalls vom Mikroprozessor 1 gesteuerten Transistor-Schalter 22, der einen Widerstand 23 bei der Bestimmung dieses Entfernungsbereichs am Steuereingang des Emitterwiderstands 18 anschaltet. Während sich der Für beide Entfernungsbereiche auf denselben Wert aufgeladene Kondensator 20 im sogenannten Fernbereich, das heißt in einer Entfernung von den Abstandsgebern 2 - 4 von größer 0,5 Meter allein über einen Entladewiderstand 24 entlädt, ist in dem sich daran anschließenden Nahbereich von kleiner oder gleich 0,5 Meter dem Widerstand 24 die Reihenschaltung aus den Widerständen 21 und 23 parallel geschaltet. Der Kondensator 20 entlädt sich damit schneller.

Daraus ergibt sich am Steuereinang des Emitterwiderstands 18 eine Steuerspannung U, die im Nahbereich den mit B und im Fernbereich den mit A bezeichneten und in Figur 5 dargestellten Verlauf besitzt. Der hierzu reziproke Verstärkungsfaktor V des Verstärkers 19 ist in Figur 5 ebenfalls qualitativ angezeigt.

Das über den Kondensator 15, den Widerstand 16, einen Bandpassfilter 25 und einen Impedanzwandler 26 in den Verstärker 19 eingehende reflektierte Ultraschallsignal wird entsprechend seiner Laufzeit mit Hilfe des Emitterwiderstands 18 so verstärkt, daß das Produkt aus Schalldruck und Verstärkungsfaktor zumindest annähernd konstant ist. Ein Schwellwertschalter 28, der das Ausgangssignal des Verstärkers 19 erhält, mißt analog die Zeit, die seit Beginn der Sendephase bis zum Auftreten eines reflektierten Signals verstrichen ist, wandelt diesen Wert digital um und führt ihn dem Mikroprozessor 1 zu. Dieser bestimmt aus der gemessenen Zeit, gegebenenfalls unter Zwischenschaltung einer die temperaturabhängige Veränderung der Schallgeschwindigkeit bestimmenden Meßeinrichtung den Abstand eines Hindernisses. Die Teile 25, 26, 19 und 28 sind für sich im Prinzip allgemein bekannt. Sie besitzen den dargestellten, im Detail nicht beschriebenen Schaltungsaufbau.

Eine Meßeinrichtung der zuletzt genannten Art in Verbindung mit einem Ultraschall- Abstandsgeber ist im Prinzip ebenfalls bekannt (vgl. Zeitschrift ELEKTRONIK, 1983, Heft 26, Seite 113) und hier nicht dargestellt.

Ist dieser Abstand gleich dem Abstand, der die Grenze des Nahbereichs - im beschriebenen Fall von 0,5 Meter - festlegt, so wird der zunächst mit seiner Resonanzfrequenz $\omega$ betriebene Resonanz-Übertrager 14 weiterhin mit seiner Resonanzfrequenz betrieben. Ist der Abstand kleiner, so wird die Frequenz des Resonanz- Übertragers 14 erhöht und damit die Ladespannung des Kondensators 13 verringert. Dadurch wird die Sendeleistung der Abstandsgeber 2 - 4 verringert. Diese Verringerung ist um so größer, je näher sich das Objekt an einem der Abstandsgeber befindet. Dadurch wird erreicht, daß bei Eingang des reflektierten Ultraschallsignals die Abstandsgeber im Anschluß an die Sendephase abgeklungen sind und das reflektierte Signal ohne Störung durch diese Abklingvorgänge aufnehmen können.

Befindet sich innerhalb des Nahbereichs sämtlicher Abstandsgeber 2 - 4 kein Objekt, so wird der Resonanz-Übertrager 14 mit seiner Resonanzfrequenz betrieben, das heißt die Abstandsgeber 2 - 4 geben dann die maximale Sendeleistung ab. Der Mikroprozessor 1 schaltet den Widerstand 23 von dem Steuereingang des Emitterwiderstands 18 ab und verringert damit den Verstärkungsfaktor V und die Ansprechempfindlichkeit des Verstärkers 19. Auch hier ergibt sich aufgrund der Laufzeit des reflektierten Ultraschallsignals eine exakte Bestimmung des Objekt-Abstands.

## Ansprüche

1. Schaltanordnung für einen Ultraschall-Entfernungsmesser für Land-Kraftfahrzeuge, mit einem auf einem Land-Kraftfahrzeug angeordneten Ultraschall-Wandler als Sender einstellbarer Sendeleistung und als Empfänger für ein Ultraschallsignal, das von einem Objekt reflektiert wird, und mit Mitteln zur Bestimmung der Objektentfernung aus dem empfangenen Echosignal, dadurch gekennzeichnet, daß Mittel zur selbsttätigen Einstellung der Sendeleistung des Senders (Abstandsgeber 2,3 oder 4) entsprechend der gemessenen Entfernung des Objekts vorgesehen sind und daß die Sendeleistung durch einen Kondensator (13) geliefert ist, der entsprechend der gemessenen Entfernung des Objekts aufgeladen ist.

2. Schaltanordnung nach Anspruch 1, dadurch gekennzeichnet, daß für die erste Messung die Sendeleistung auf den maximalen Wert eingestellt ist.

3. Schaltanordnung nach Anspruch 1 oder 2, dadurch gekennzeichnet, daß die Aufladung des Kondensators (13) durch einen Resonanz-Übertrager (14) erfolgt.

4. Schaltanordnung nach Anspruch 3, dadurch gekennzeichnet, daß der Resonanz-Übertrager (14) für die maximale Sendeleistung primärseitig mit Resonanzfrequenz und für geringere Sendeleistung mit demgegenüber höherer Frequenz angeregt ist.

5. Schaltananordnung nach einem der Ansprüche 2 bis 4, dadurch gekennzeichnet, daß der Kondensator (13) durch synchrones Durchschalten eines zentralen Schalters (Transistor-Schalter 12) zwischen Kondensator und Sender und eines jedem Sender 2-4) zugeordneten Schalters (Schalter 9, 10 oder 11) entladen ist.

6. Schaltanordnung nach Anspruch 5, dadurch gekennzeichnet, daß der Empfänger (Abstandsgeber 2-4) durch den zugeordneten Schalter (Transistor-Schalter 9,10 oder 11) bei geöffnetem zentralen Schalter (Transistor-Schalter 12) eingeschaltet ist.

7. Schaltanordnung nach Anspruch 6, dadurch gekennzeichnet, daß das reflektierte Ultraschallsignal in einen Verstärker (19) eingegeben ist, der eine in Abhängigkeit von der Laufzeit des Ultraschallsignals veränderte Ansprechempfindlichkeit besitzt.

8. Schaltanordnung nach Anspruch 7, dadurch gekennzeichnet, daß der Verstärker (19) zwei Stufen von Ansprechempfindlichkeit besitzt, die aneinander anschließende Entfernungsbereichen zugeordnet sind.

## Claims

1. A circuit for an ultrasonic range finder for land vehicles, comprising an ultrasonic transducer disposed on a land vehicle and serving as an adjustable-power transmitter and as a receiver of an ultrasonic signal reflected by the object, and comprising means for determining the range of the object from the received echo signal, characterised in that means (range transmission unit 2, 3 or 4) are provided for automatically adjusting the power of the transmitter in dependence on the measured distance of the object, and the transmitter power is delivered by a capacitor (13) which is charged in dependence on the measured distance of the object.

2. A circuit according to claim 1, characterised in that, for the first measurement, the transmitter power is set at the maximum value.

3. A circuit according to claim 1 or 2, characterised in that the capacitor (13) is charged by a resonance transformer (14).

4. A circuit according to claim 3, characterised in that the resonance transformer (14) is excited on the primary side at the resonance frequency for maximum transmitter power and at a higher frequency for lower transmitter power.

5. A circuit according to any of claims 2 to 4, characterised in that the capacitor (13) is discharged by synchronously connecting a central switch (transistor switch 12) between the capacitor and transmitter and a switch (switch 9, 10 or 11) associated with each transmitter (2 - 4).

6. A circuit according to claim 5, characterised in that the receiver (range transmission units 2 - 4) is switched on by the associated switch (transistor switch 9, 10 or 11) when the central switch (transistor switch 12) is open.

7. A circuit according to claim 6, characterised in that the reflected ultrasonic signal is fed to an amplifier (19) which has a response-sensitivity which changes in dependence on the transit time of the ultrasonic signal.

8. A circuit according to claim 7, characterised in that the amplifier (19) has two stages of response-sensitivity, associated with adjacent distance ranges.


**Revendications**

1. Agencement de circuit pour un télémètre ultra-sonore pour des véhicules automobiles routiers, avec un convertisseur ultra-sonore disposé sur un véhicule automobile routier en tant qu'émetteur d'une puissance d'émission réglable et en tant que récepteur pour un signal ultrasonore qui est réfléchi par un objet, et avec des moyens pour déterminer l'éloignement de l'objet à partir du signal d'écho reçu, agencement de circuit caractérisé en ce qu'il est prévu des moyens pour le réglage automatique de la puissance d'émission de l'émetteur (indicateur de distance 2, 3 ou 4) en fonction de l'éloignement mesuré de l'objet, et que la puissance d'émission est délivrée par un condensateur (13) qui est chargé de façon correspondante à l'éloignement mesuré de l'objet.

2. Agencement de circuit selon la revendication 1, caractérisé en ce que, pour la première mesure, la puissance d'émission est réglée à la valeur maximale.

3. Agencement de circuit selon la revendication 1 ou la revendication 2, caractérisé en ce que la charge du condensateur (13) s'effectue par l'intermédiaire d'un transmetteur à résonance (14).

4. Agencement de circuit selon la revendication 3, caractérisé en ce que, pour la puissance d'émission maximale, le transmetteur à résonance (14) est excité côté primaire avec la fréquence de résonance, tandis qu'il est excité avec une fréquence plus élevée que celle-ci pour une puissance d'émission plus réduite.

5. Agencement de circuit selon une des revendications 2 à 4, caractérisé en ce que le condensateur (13) est déchargé par commutation synchrone d'un commutateur central (commutateur à transistor 12) entrele condensateur et l'émetteur, et d'un commutateur (commutateur 9, 10 ou 11) associé à chaque émetteur (2 à 4).

6. Agencement de circuit selon la revendication 5, caractérisé en ce que le récepteur (indicateur de distance 2 à 4) est branché par le commutateur qui lui est associé (commutateur à transistor 9, 10 ou 11) alors que le commutateur central (commutateur à transistor 12) est ouvert.

7. Agencement de circuit selon la revendication 6, caractérisé en ce que le signal ultra-sonore réfléchi est introduit dans un amplificateur (19) qui a une sensibilité de fonctionnement modifiée par la durée de parcours du signal ultrasonore.

8. Agencement de circuit selon la revendication 7, caractérisé en ce que l'amplificateur (19) a deux paliers de sensibilité de fonctionnement qui sont associés à des zones d'éloignement se raccordant l'une à l'autre.

Fig. 1

Fig. 2

Fig. 3

Fig. 4

Fig. 5